# EUROPEAN PATENT APPLICATION

(11) **EP 3 605 964 A1**
(43) Date of publication of application: **05.02.2020**
(21) Application number: 18776557.3
(22) Date of filing: 30.03.2018
(51) Int. Cl.: H04L 12/70

(54) **METHOD OF CONTROLLING VIRTUAL NETWORK FUNCTION, VIRTUAL NETWORK FUNCTION MANAGEMENT DEVICE, AND VIRTUAL NETWORK PROVIDING SYSTEM**

(30) Priority: 31.03.2017 JP 2017073039
(71) Applicant: NEC Corporation, Tokyo 108-8001 (JP)
(72) Inventor: NISHIGORI, Yutaka, Tokyo 108-8001 (JP); ZEMBUTSU, Hajime, Tokyo 108-8001 (JP); ISHII, Yasuyuki, Tokyo 108-8001 (JP)
(74) Representative: Reeve, Nicholas Edward
(86) International application number: PCT/JP2018/013769
(87) International publication number: WO 2018/181956

(57) **Abstract**

The invention optimizes a VM (virtual machine) that configures a virtual network function. A virtual network function management apparatus obtains information related to performance of a physical machine allocated to the virtual network function. The virtual network function management apparatus transmits information related to the performance of the physical machine allocated to the virtual network function to a virtual machine that configures the virtual network function. The virtual network function management apparatus causes the virtual machine that configures the virtual network function to change a congestion determination threshold that is set to the virtual machine based on the performance of the physical machine.

## Description

### FIELD

### (CROSS-REFERENCE TO RELATED APPLICATIONS)

The present application claims priority from Japanese Patent Application No. 2017-073039 (filed on March 31, 2017) the content of which is hereby incorporated in its entirety by reference into this specification. The present invention relates to a method of controlling a virtual network function, a virtual network function management apparatus and a virtual network providing system, and in particular to a method of controlling a virtual network function, a virtual network function management apparatus and a virtual network providing system, using a virtual machine that configures a virtual network function.

### BACKGROUND

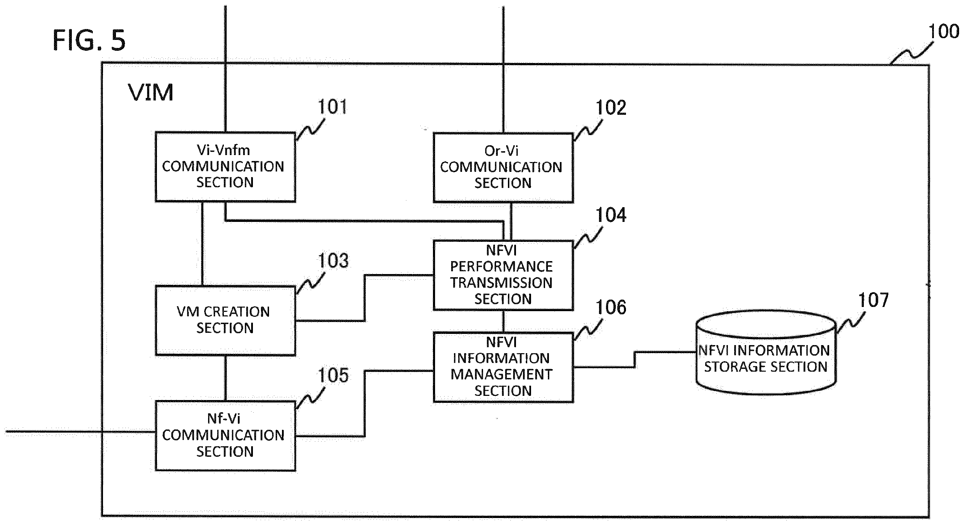

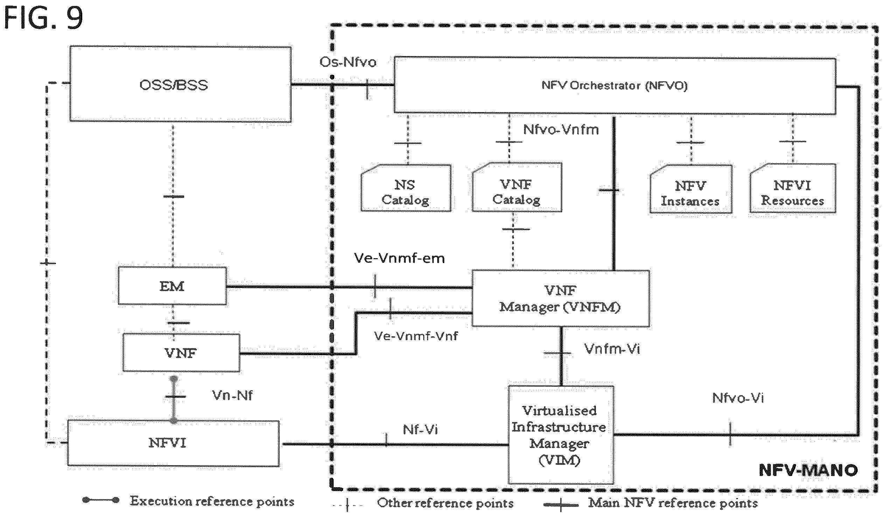

Non-Patent Literature 1 discloses a system referred to as network function virtualization (below, NFV) in which functions of various types of communication equipment in a network are realized in an operating system (OS) in which a general purpose server is virtualized, using virtualization technology. NTV is realized based on, for example, MANO (Management & Orchestration) architecture. FIG. 9 is a diagram citing Figure 5.1 (The NFV-MANO architectural framework with reference points) on page 23 of Non-Patent Literature 1.

Patent Literature 1 discloses a virtualization base selection apparatus that selects a physical server deploying a VM which is a virtualized network function, from a NFVI (Network Functions Virtualization Infrastructure). According to the same literature, the virtualization base selection apparatus is provided with at least a physical resource conversion section 1 that converts an application request which is a logical request into a physical resource request, a server extraction section 2 that extracts a physical server that satisfies the physical resource request after the conversion from a physical server in the NFVI, and an optimum server selection section 3 that selects an optimum physical server from among the extracted physical servers.

### CITATION LIST

### PATENT LITERATURE

[PTL 1]
Japanese Patent Kokai Publication No. JP2016-143365A

### NON-PATENT LITERATURE

[NPL 1]
Non-Patent Literature 1: ETSI GS NFV-MAN 001 VI.1.1 (2014-12) Network Functions Virtualisation (NFV); Management and Orchestration (online) (retrieved on March 24, 2017), Internet: <http://www.etsi.org/deliver/etsi_gs/NFV-MAN/001_099/001/01.01.01_60/gs_NFV-MAN001v010101p.pdf>

### SUMMARY OF INVENTION

### TECHNICAL PROBLEM

The following analysis is given according to the present invention. In NFV-MANO architecture of Non-Patent Literature 1, there may exist a physical machine having different performance in resources managed by a VIM (Virtualized infrastructure Manager). In such a case, as a deployment destination of a VM (also referred to as VNFc, VNF component) that configures a virtual network function, there is a possibility of a physical machine of lower performance being selected. Therefore, a virtual network function management apparatus in charge of configuration of a virtual network function (below, VNF), lifecycle management, and element management (referred to as VNF manager, below: "VNFM") assumes a case where a virtual machine of lower performance is selected, and a threshold or the like must be set to the virtual network function.

Patent Literature 1 discloses a virtualization base selection apparatus that converts an application request inputted from a system manager to a physical resource request, and performs selection of an NFVI (Network Functions Virtualization Infrastructure), but in the same configuration, the VNFM does not hold information related to the NFVI, and since the NFVI cannot be selected, it may not be possible to optimize the VNF. For example, assuming a case where the abovementioned physical machine with lower performance is selected, in a case where a VNF is configured using a VM in which a low congestion determination threshold or the like is set, a congestion determination is made although basically there is no need to make a congestion determination. As a result, since dropping an unnecessary packet or addition of a resource or the like is performed, practical use of the resource is not efficient.

It is an object of the invention to provide a method of controlling a virtual network function, a virtual network function management apparatus and a virtual network providing system, that can contribute to optimization of a VM (virtual machine) configuring a virtual network function.

### SOLUTION TO PROBLEM

According to a first aspect, the invention provides a method of controlling a virtual network function, wherein a virtual network function management apparatus obtains information related to the performance of a physical machine allocated to a virtual network function. The method of controlling a virtual network function further transmits information related to the performance of the physical machine allocated to the virtual network function, to a virtual machine that configures the virtual network function. The virtual network function management apparatus causes the virtual machine that configures the virtual network function to change a congestion determination threshold set in the virtual machine, based on the performance of the physical machine. The method is tied to a particular machine which is a virtual network function management apparatus that provides a virtual network function.

According to a second aspect, the invention provides a virtual network function management apparatus including a means for obtaining information related to the performance of a physical machine allocated to a virtual network function; and a means for transmitting information related to the performance of the physical machine allocated to the virtual network function, to a virtual machine that configures the virtual network function; wherein the virtual machine that configures the virtual network function is made to change a congestion determination threshold set in the virtual machine, based on the performance of the physical machine.

According a third aspect, the invention provides a virtual network function providing system including the abovementioned virtual network function management apparatus.

### ADVANTAGEOUS EFFECTS OF INVENTION

According to the present invention, it is possible to optimize a virtual machine (VM) that configures a virtual network function. In other words, the present invention converts an apparatus providing a virtual network function to one that dramatically improves the performance thereof.

### BRIEF DESCRIPTION OF DRAWINGS

[Fig. 1]

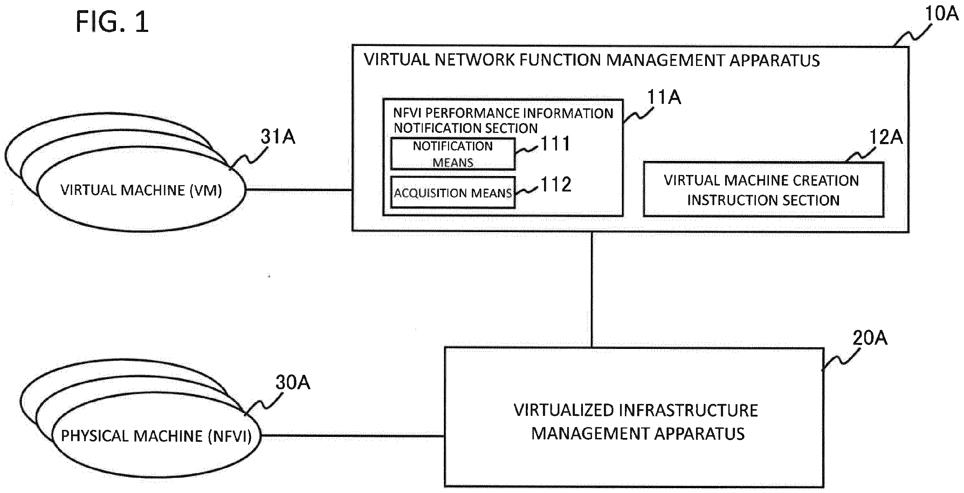

   FIG. 1 is a diagram illustrating a configuration of an exemplary embodiment of the present invention.
[Fig. 2]

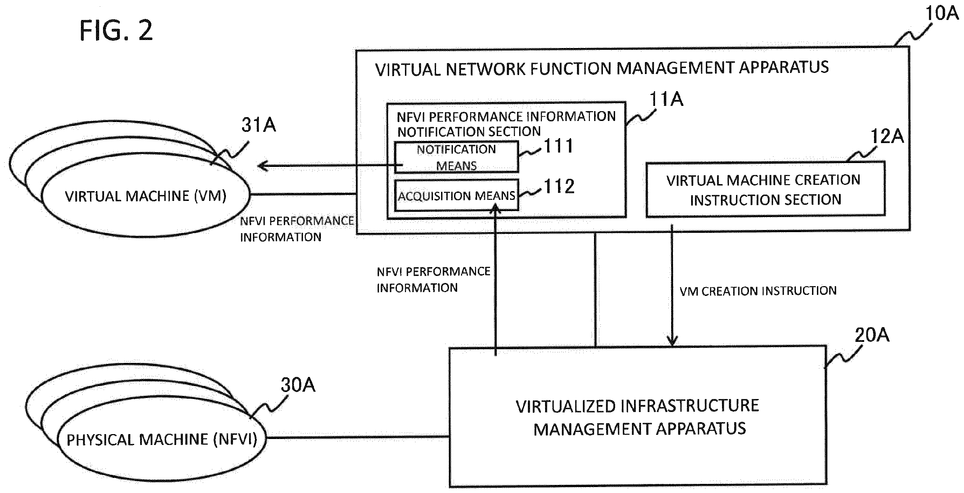

   FIG. 2 is a diagram illustrating operations of an exemplary embodiment of the invention.
[Fig. 3]

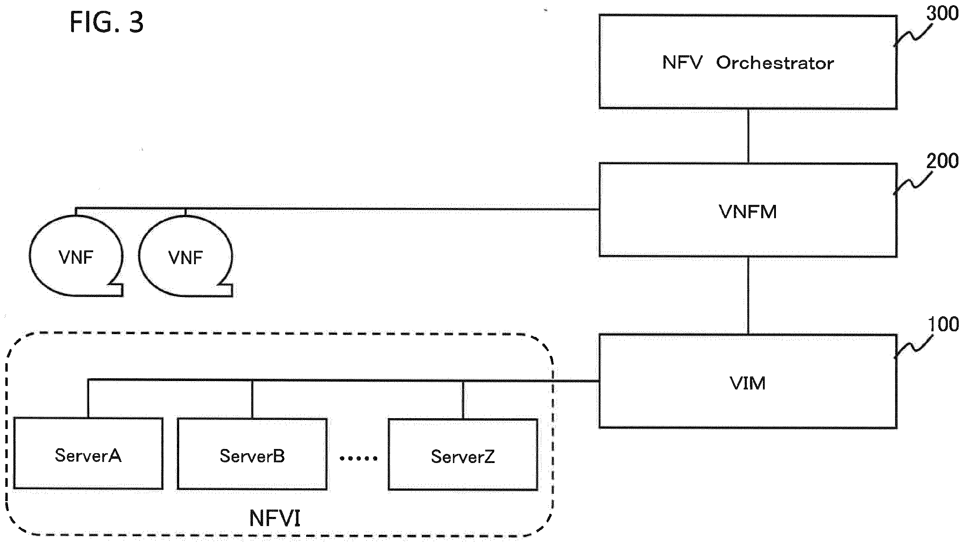

   FIG. 3 is a diagram illustrating a configuration of a virtual network function providing system in a first exemplary embodiment of the present invention.
[Fig. 4]

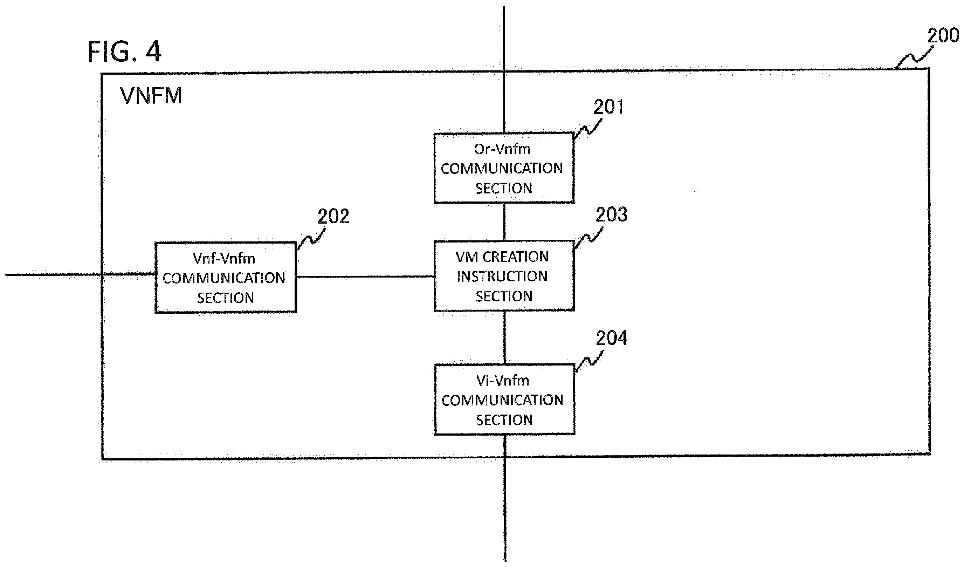

   FIG. 4 is a functional block diagram illustrating a configuration of a VNFM in the first exemplary embodiment of the invention.
[Fig. 5]
   FIG. 5 is a functional block diagram illustrating a configuration of a VIM in the first exemplary embodiment of the invention.
[Fig. 6]

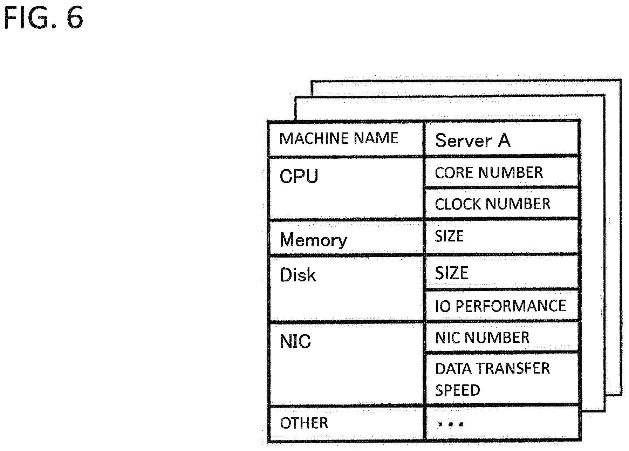

   FIG. 6 is a diagram illustrating an example of NFVI performance information provided to a VNFM side by a VIM in the first exemplary embodiment of the invention.
[Fig. 7]

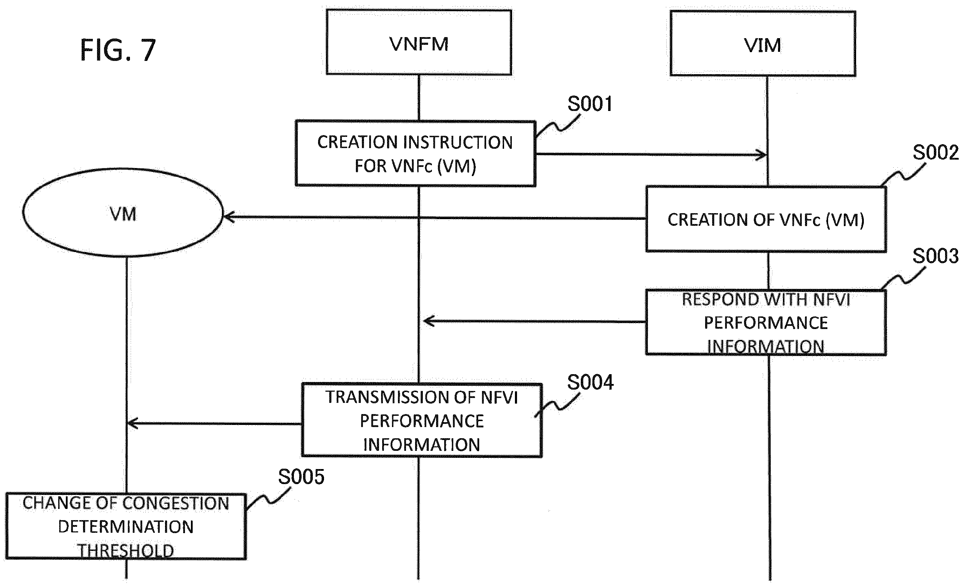

   FIG. 7 is a sequence diagram illustrating operations of the first exemplary embodiment of the invention.
[Fig. 8]

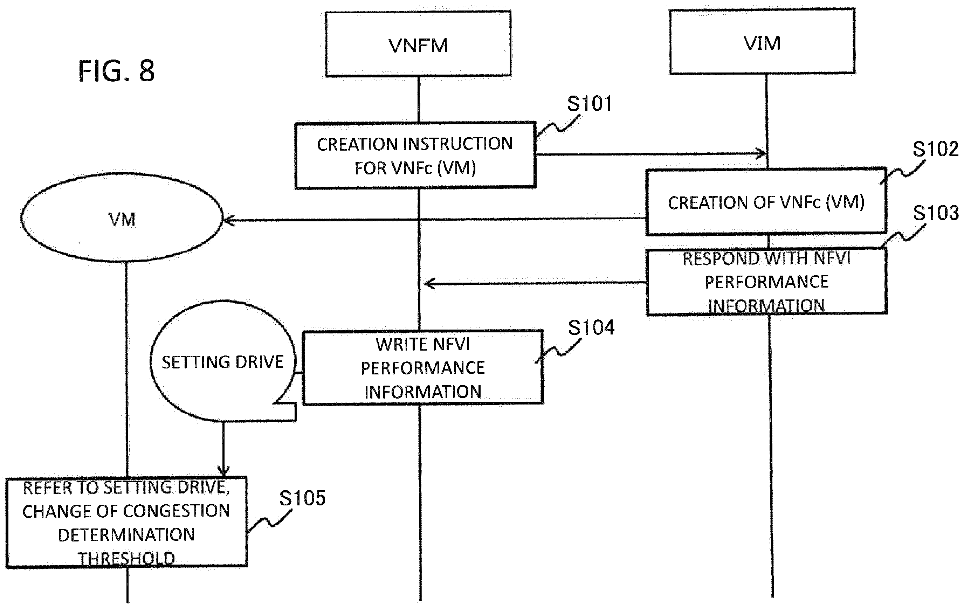

   FIG. 8 is a sequence diagram illustrating operations of a second exemplary embodiment of the invention.
[Fig. 9]
   FIG. 9 is a diagram illustrating NFV-MANO of an NFV architecture (citing Fig. 5.1 of Non-Patent Literature 1).

### MODES

First, a description is given of an outline of exemplary embodiments of the present invention, with reference to the drawings. It is to be noted that reference symbols in the drawings attached to this outline are added to respective elements for convenience as examples in order to aid understanding, and are not intended to limit the present invention to modes illustrated in the drawings. Connection lines between blocks in the diagrams referred to in the following description include both unidirectional or bidirectional lines. Unidirectional arrows schematically show flow of main signals (data), but do not exclude bidirectionality.

The present invention, in an exemplary embodiment thereof as shown in FIG. 1, can be implemented in a configuration including a virtual network function management apparatus 10A that implements a virtual network function using a virtual machine 31A, and a virtualized infrastructure management apparatus 20A. The virtualized infrastructure management apparatus 20A creates a virtual machine in the virtualized infrastructure (NFVI) in accordance with an instruction from the virtual network function management apparatus 10A.

More specifically, a virtual network function management apparatus 10A includes a means (acquisition means 112) for acquiring information related to performance of a physical machine allocated to the virtual network function. In addition, the virtual network function management apparatus 10A includes a means (notification means 111) for transmitting information related to the performance of the physical machine allocated to the virtual network function to a virtual machine that configures the virtual network function.

For example, as illustrated in FIG. 2, a virtual machine creation instruction section 12A instructs the virtualized infrastructure management apparatus 20A to create a virtual machine (VM). The virtualized infrastructure management apparatus 20A that has received the instruction selects an arbitrary physical machine, and creates a virtual machine (VM) using the resource.

As illustrated in FIG. 2, the acquisition means 112 of the NFVI performance information notification section 11A obtains information related to performance of a physical machine allocated to the virtual network function, from the virtualized infrastructure management apparatus 20A. Next, the notification means 111 of the NFVI performance information notification section 11A of FIG. 2A transmits, with respect to the created virtual machine 31A, information related to performance of a physical machine to the created virtual machine 31A.

The virtual machine 31A changes a congestion determination threshold, based on the information related to the performance of the physical machine allocated to itself. The congestion determination threshold may be a signal reception processing upper limit threshold per unit time, an upper limit threshold of usage rate of a CPU (Central Processing Unit), a network usage range upper limit threshold, or the like.

It is to be noted that the following may be considered with regard to method of changing the congestion determination threshold. First, in a case where performance of a physical machine is higher than a prescribed reference performance, the congestion determination threshold is changed to a value higher than the prescribed reference value. In other words, the congestion determination threshold set in the virtual machine 31A is higher than the reference threshold set assuming a physical machine having the prescribed reference performance. For example, the virtual machine 31A changes a signal reception processing upper limit threshold per unit time, which is a congestion determination threshold, from BPS to Ybps that satisfies X<Y. Thus, it is possible to efficiently use the capability of a physical machine to which the virtual machine is deployed.

Conversely, in a case where the performance of the physical machine is lower than a prescribed reference performance, the virtual machine 31A changes the congestion determination threshold to a value lower than the prescribed reference value. In other words, the congestion determination threshold set in the virtual machine 31A is lower than the reference threshold set assuming a physical machine having a prescribed reference performance. For example, the virtual machine 31A changes an upper limit threshold of a CPU (Central Processing Unit), which is a congestion determination threshold, from x% to y% that satisfies x>y. Thus, it is possible to handle, at an earlier time, there being a high probability of the occurrence of a state of exceeding the capability of a physical machine to which the virtual machine is deployed.

It is to be noted that a plurality of congestion determination thresholds may be changed at the same time. For example, the physical machine 31A may perform a process in which both a signal reception processing upper limit threshold per unit time and an upper limit threshold of CPU usage rate are raised (lowered). The virtual machine 31A may perform a process of raising one and lowering the other, among the signal reception processing upper limit threshold per unit time and the upper limit threshold of the CPU usage rate.

### <First Exemplary Embodiment>

Continuing, a detailed description is given concerning a first exemplary embodiment applied to the present invention, in a MANO (Management & Orchestration) of Non-Patent Literature 1, making reference to the drawings. FIG. 3 is a diagram illustrating a configuration of a virtual network function providing system in a first exemplary embodiment of the present invention.

Referring to FIG. 3, a configuration is shown in which a VIM (Virtualized infrastructure Manager) 100 that manages a virtualized infrastructure (NFVI), a VNFM 200 that manages a VNF operating in the NFVI, and an NFV Orchestrator 300 that performs management of orchestration and service for an overall system, are connected.

The VIM 100 corresponds to the virtualized infrastructure management apparatus, and in the MANO architecture that performs control of VNF, principally, is in charge of management of NFVI configured by a physical machine, storage, network resource or the like. In the present exemplary embodiment, a description is given in which, among the resources managed by the VIM 100, a plurality of physical servers that are VM deployment destinations are present (Server A to Z), and in comparison with another physical server, there is 1 or more physical servers with at least 1 different performance value, such as a CPU, memory or the like.

The VNFM 200 corresponds to the virtual network function management apparatus, and information of at least a physical server among resources managed by the VIM is requested of the VIM 100. The VNFM 200 refers to content of the information obtained from the VIM 100, requests deployment of VNFc (VM) that is a component of a VNF in a specified physical server, and configures the VNF. The VNFM 200 provides resources and constraint information required by the VNF, to the NFV Orchestrator 300.

The NFV Orchestrator 300 performs overall orchestration based on a service request from a user (OSS/BSS of FIG. 9), or information provided by the VNFM 200.

FIG. 4 is a diagram illustrating a configuration of the VNFM of the first exemplary embodiment of the present invention. Referring to FIG. 4, a configuration is shown that is provided with an Or-Vnfm communication section 201, a Vnf-Vnfm communication section 202, a VM creation instruction section 203, and a Vi-Vnfm communication section 204.

The Or-Vnfm communication section 201 is used in reception of a VNF creation request from the NFV Orchestrator 300 and in provision of information to the NFV Orchestrator 300.

The Vnf-Vnfm communication section 202, besides being used in VNF control, functions as an NFVI performance information notification section 11A that transmits NFVI performance information to a VNFc (VM) that configures a VNF. Here, the NFVI performance information corresponds to information related to performance of a physical machine allocated to the virtual network function.

The VM creation instruction section 203 instructs the VIM 100 to create a VM corresponding to the VNFc. The VM creation instruction section 203 receives performance information (below, denoted as "NFVI information") of the NFVI in which the VM is created, from the VIM 100 that creates a VM, and transmits the information to the Vnf-Vnfm communication section 202. It is to be noted that transfer of performance information of the NFVI may be provided via a dedicated application programming interface (API).

The Vi-Vnfm communication section 204 is used in transmission of a VM creation instruction of the VIM 100, and in information exchange between the VNFM and VIM such as receiving a result thereof.

FIG. 5 is a diagram illustrating a configuration of the VIM of the first exemplary embodiment of the present invention. Referring to FIG. 5, a configuration is illustrated that is provided with a Vi-Vnfm communication section 101, an Or-Vi communication section 102, a VM creation section 103, an NFVI performance transmission section 104, an Nf-Vi communication section 105, an NFVI information management section 106, and an NFVI information storage section 107.

The Vi-Vnfm communication section 101 is used in reception of a VM creation request from the VNFM or in provision of information to the VNFM.

The Or-Vi communication section 102 is used in reception of a VM creation request from the NFV Orchestrator 300 or in provision of information to the NFV Orchestrator 300.

The VM creation section 103 creates a VM corresponding to a VNFc, in response to the request from the VNFM 200.

The NFVI performance transmission section 104, after creation of the VM by the VM creation section 103, reads physical server information from the NFVI information storage section 107, via the NFVI information management section 106, and responds to the VNFM 200.

FIG. 6 is a diagram illustrating an example of NFVI information provided to the VNFM 200 side from the VIM 100. In the example of FIG. 6, the number of CPUs of a physical server (Server A), clock number, memory size, disk size, IO performance (Input/Output performance), number of NICs (Network Interface Card), NIC data transmission speed and the like are recorded. The VNFM 200 may transmit this type of NFVI information as NFVI performance information as it is to a VM, or may perform some type of processing.

An Nf-Vi communication section 105 is used in an instruction to the NFVI to create a VM, in state exchange, or the like.

An NFVI information management section 106 collects NFVI information and records it in an NFVI information storage section 107. The NFVI information management section 106 extracts NFVI information from the NFVI information storage section 107, in response to a request from the NFVI performance transmission section 104, and performs transmission. It is to be noted that, as NFVI information stored in the NFVI information storage section 107, in addition to specification information of each server shown in FIG. 6, state information of each server may be stored and provided to the VNFM 200.

It is to be noted that the respective sections (processing means) of the VNFM to the VIM shown in FIG. 4 and FIG. 5 may be implemented by a computer program that executes the abovementioned respective processing on a computer that configures these apparatuses, using hardware thereof.

Continuing, a detailed description is given concerning operations of the present exemplary embodiment, making reference to the drawings. FIG. 7 is a sequence diagram illustrating operations of the first exemplary embodiment of the invention. Referring to FIG. 7, first the VNFM 200 instructs the VIM 100 to create a VNFc (VM) (step S001).

The VIM 100 that receives the instruction selects a suitable physical server (NFVI) in accordance with the instruction from the VNFM 200, and creates the VNFc (VM) (step S002).

Next, the VIM 100 transmits the NFVI information creating the VNFc (VM) to the VNFM 200 (step S003).

The VNFM 200 that receives the NFVI information transmits the NFVI performance information to the VNFc (VM) (step S004).

The VM that receives the NFVI performance information changes the congestion determination threshold, in response to performance information of the physical server that it is operating itself shown by the NFVI performance information that was received (step S005).

As described above, according to the present exemplary embodiment, it is possible to increase or decrease the congestion determination threshold of the VM, in response to the performance information of the physical server (NFVI) in which the VM is deployed. In this way, efficiency of resource usage of the physical server in which the VM is deployed is realized.

### <Second Exemplary Embodiment>

Continuing, a detailed description is given concerning a second exemplary embodiment in which a modification is added to the abovementioned first exemplary embodiment, making reference to the drawings. A point of difference between the first exemplary embodiment and the second exemplary embodiment is the point of using a setting drive called a Config Drive in providing NFVI performance information to the VM; the configuration and operation of respective sections is otherwise the same. A description is given below centered on the point of difference.

FIG. 8 is a sequence diagram illustrating operations of the second exemplary embodiment of the invention. Operations of steps S101 to S103 in FIG. 8 are the same as steps S001 to S003 of FIG. 7 illustrating operations of the first exemplary embodiment, and a description is omitted. The VNFM 200 that receives the NFVI information writes the NFVI performance information to the setting drive (Config) (step S104).

The VM receives the NFVI performance information via the setting drive (Config) connected at startup time, and changes the congestion determination threshold, in response to performance information of the physical server where it is operating itself shown by the NFVI performance information (step S105).

As described above, it is possible to provide the NFVI performance information to the VM from the VNFM 200 via a direct or an indirect path.

A description has been given above of respective exemplary embodiments of the present invention, but the present invention is not limited to the abovementioned exemplary embodiments, and modifications, substitutions and adjustments may be added within a scope that does not depart from fundamental technical concepts of the invention. For example, network configurations, respective element configurations and message expression forms illustrated in the respective drawings are examples for the purpose of aiding understanding of the invention, and are not intended to limit the invention to configurations illustrated in the drawings.

For example, in the abovementioned first exemplary embodiment, 3 examples of the congestion determination threshold are shown: a signal reception processing upper limit threshold per unit time, an upper limit threshold of usage rate of a CPU (Central Processing Unit), and a network usage range upper limit threshold, but it is also possible to change a threshold or the like outside of these. For example, a parameter for congestion determination such as a timer value or counter (initial value or counter range) held by a VM may also be changed. For example, by raising an initial value or increasing a counter range, instead of processing to raise the congestion determination value, an effect equivalent to raising the congestion determination value is obtained. Therefore, by changing a parameter for congestion determination in response to performance of a physical machine, it is also possible to change a service characteristic of a VNF.

The physical server information (NFVI information) illustrated in FIG. 6 determines, with regard to the VM, whether or not the performance of the physical server at a deployment destination is high in comparison to others, and may be such as to enable change of the congestion determination threshold, but is not limited to the mode illustrated in FIG. 6. For example, instead of various types of performance values on the physical server illustrated in FIG. 6, the physical server model number or product name may be transmitted to the VM side. In the same way, instead of various types of performance values on the physical server illustrated in FIG. 6, the VNFM 200 may respond with server rank information with various types of performance value of the physical server illustrated in FIG. 6 separates by hierarchical rank. For example, the VNFM 200, may respond with server rank information such as having a physical server with high performance as AAA and a physical server with low performance as CCC.

Finally, preferred modes of the present invention are summarized.

### <First Mode>

### (Refer to the method of controlling the virtual network function according to the first aspect described above.)

### <Second Mode>

The method of controlling the virtual network function, wherein the virtual network function management apparatus writes information related to performance of the physical machine allocated to the virtual network function, to a prescribed setting drive, instead of the virtual network function management apparatus transmitting information related to the performance of the physical machine allocated to the virtual network function, to a virtual machine that configures a virtual network function; and wherein the virtual machine that configures the virtual network function can use a method of changing a congestion determination threshold set in the virtual machine, based on the performance of the physical machine read from the prescribed setting drive.

### <Third Mode>

The method of controlling the virtual network function, wherein the congestion determination threshold may include at least one of a processing upper limit value for a received signal in the virtual machine, a processor usage rate, and an upper limit value of data transfer amount per unit time.

### <Fourth Mode>

The method of controlling the virtual network function, wherein a configuration may be used in which, in a case where the performance of a physical machine is higher than a prescribed reference performance, the virtual machine changes the congestion determination threshold to a value higher than a reference value.

### <Fifth Mode>

The method of controlling the virtual network function, wherein a configuration may be used in which, in a case where the performance of the physical machine is lower than a prescribed reference performance, the virtual machine changes the congestion determination threshold to a value lower than a reference value.

### <Sixth Mode>

The method of controlling the virtual network function, wherein it is possible to change a parameter for congestion determination of the virtual machine, instead of the congestion determination threshold.

### <Seventh Mode>

### (Refer to the virtual network function management apparatus according to the second aspect described above.)

### <Eighth Mode>

### (Refer to the virtual network function providing system according to the third aspect described above.)

It is to be noted that the abovementioned seventh to eighth modes may be expanded with regard to the second to sixth modes, similar to the first mode.

It is to be noted that the various disclosures of the abovementioned Patent Literature and Non-Patent Literature are incorporated herein by reference thereto. Modifications and adjustments of exemplary embodiments and examples may be made within the bounds of the entire disclosure (including the scope of the claims) of the present invention, and also based on fundamental technological concepts thereof. Various combinations and selections of various disclosed elements (including respective elements of the respective claims, respective elements of the respective exemplary embodiments and examples, respective elements of the respective drawings and the like) are possible within the scope of the disclosure of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values and small ranges included in the relevant ranges should be interpreted to be specifically described even where there is no particular description thereof.

### REFERENCE SIGNS LIST

- 10A: virtual network function management apparatus
- 11A: NFVI performance information notification section
- 12A: virtual machine creation instruction section
- 20A: virtualized infrastructure management apparatus
- 30A: physical machine (NFVI)
- 31A: virtual machine (VM)
- 100: VIM (virtualized infrastructure manager)
- 101: Vi-Vnfm communication section
- 102: Or-Vi communication section
- 103: VM creation section
- 104: NFVI performance transmission section
- 105: Nf-Vi communication section
- 106: NFVI information management section
- 107: NFVI information storage section
- 111: notification means
- 112: acquisition means
- 200: VNFM
- 201: Or-Vnfm communication section
- 202: Vnf-Vnfm communication section
- 203: VM creation instruction section
- 204: Vi-Vnfm communication section
- 300: NFV Orchestrator

## Claims

1. A method of controlling a virtual network function, wherein a virtual network function management apparatus:
obtains information related to performance of a physical machine allocated to a virtual network function; and
transmits information related to the performance of the physical machine allocated to the virtual network function, to a virtual machine that configures the virtual network function; and wherein
the virtual network function management apparatus causes the virtual machine that configures the virtual network function to change a congestion determination threshold set in the virtual machine, based on the performance of the physical machine.

2. The method of controlling a virtual network function according to claim 1, wherein
the virtual network function management apparatus writes information related to performance of the physical machine allocated to the virtual network function, to a prescribed setting drive, instead of the virtual network function management apparatus transmitting information related to the performance of the physical machine allocated to the virtual network function, to a virtual machine that configures the virtual network function; and wherein
the virtual machine that configures the virtual network function changes a congestion determination threshold set in the virtual machine, based on the performance of the physical machine read from the prescribed setting drive.

3. The method of controlling the virtual network function according to claim 1 or 2, wherein the congestion determination threshold includes at least one of a processing upper limit value for a received signal in the virtual machine, a processor usage rate, and an upper limit value of data transfer amount per unit time.

4. The method of controlling the virtual network function according to any one of claims 1 to 3, wherein, in a case where performance of the physical machine is higher than a prescribed reference performance, the virtual machine changes the congestion determination threshold to a value higher than the reference value.

5. The method of controlling the virtual network function according to any one of claims 1 to 4, wherein, in a case where performance of the physical machine is lower than a prescribed reference performance, the virtual machine changes the congestion determination threshold to a value lower than the reference value.

6. The method of controlling the virtual network function according to any one of claims 1 to 5, wherein a parameter for congestion determination of the virtual machine is changed, instead of the congestion determination threshold.

7. A virtual network function management apparatus comprising:
a means for acquiring information related to performance of a physical machine allocated to a virtual network function; and
a means for transmitting information related to the performance of the physical machine allocated to the virtual network function, to a virtual machine that configures the virtual network function; wherein
the virtual machine that configures the virtual network function is made to change a congestion determination threshold set in the virtual machine, based on the performance of the physical machine.

8. A virtual network function providing system comprising:
a means for acquiring information related to performance of a physical machine allocated to a virtual network function; and
a means for transmitting information related to the performance of the physical machine allocated to the virtual network function, to a virtual machine that configures the virtual network function; wherein
the virtual machine that configures the virtual network function is made to change a congestion determination threshold set in the virtual machine, based on the performance of the physical machine.
